# EUROPEAN PATENT APPLICATION

(11) **EP 3 703 343 A1**
(43) Date of publication of application: **02.09.2020**
(21) Application number: 18879662.7
(22) Date of filing: 13.11.2018
(51) Int. Cl.: H04L 29/12

(54) **METHOD AND DEVICE FOR CONFIGURING SERVICE FLOW**

(30) Priority: 16.11.2017 CN 201711139249
(71) Applicant: Huawei Technologies Co., Ltd., Longgang District Shenzhen, Guangdong 518129 (CN)
(72) Inventor: YANG, Wenle, Shenzhen Guangdong 518129 (CN); ZHENG, Ruobin, Shenzhen Guangdong 518129 (CN)
(74) Representative: Maiwald Patent- und Rechtsanwaltsgesellschaft mbH
(86) International application number: PCT/CN2018/115127
(87) International publication number: WO 2019/096103

(57) **Abstract**

This application discloses a service flow configuration method. In the method, a user-side terminal communicates with a DHCP server by using a control device in a DHCP process. The control device receives a first DHCP packet sent by the DHCP server, where the first DHCP packet includes an IP address of a server configured to provide a configuration file, an identifier of the configuration file, and an IP address of the user-side terminal. The control device replaces, with an IP address of the control device, the IP address that is in the first DHCP packet and that is of the server configured to provide the configuration file, and sends the IP address of the control device to the terminal by using a second DHCP packet. The control device receives a first request packet that includes the identifier of the configuration file and that is sent by the terminal. The control device obtains, based on the identifier of the configuration file from the server configured to provide the configuration file, a configuration file corresponding to the terminal. The control device performs service configuration on the terminal and an access node based on the configuration file corresponding to the terminal.

## Description

This application claims priority to Chinese Patent Application No. CN 201711139249.0, filed with the Chinese Patent Office on November 16, 2017 and entitled "SERVICE FLOW CONFIGURATION METHOD AND APPARATUS", which is incorporated herein by reference in its entirety.

### TECHNICAL FIELD

This application relates to the communications field, and in particular, to a service flow configuration method and an apparatus.

### BACKGROUND

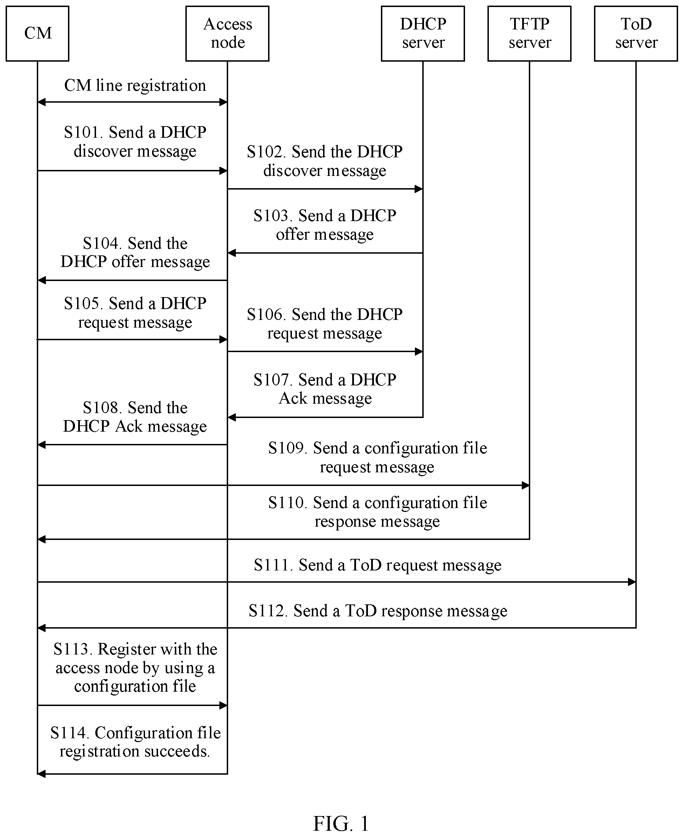

FIG. 1 is a flowchart of existing cable modem (cable modem, CM) registration. As shown in FIG. 1, after an access node manually completes parameter configuration, a CM performs line registration with the access node that completes the parameter configuration. After completing the line registration, the CM can communicate with the access node that completes the parameter configuration. The access node in FIG. 1 may be a cable modem termination system (cable modem termination system, CMTS) or a converged cable access platform (Converged Cable Access Platform, CCAP), or the access node in FIG. 1 includes an optical line terminal (optical line terminal, OLT) and a cable media converter (cable media converter, CMC). The following describes an existing CM registration procedure in a form in which the access node in FIG. 1 is the CMTS.

S101 and S102. The CM sends a dynamic host configuration protocol (Dynamic Host Configuration Protocol, DHCP) discover (discovery) message to a DHCP server by using the access node. The DHCP discover message is used to request the DHCP server to allocate an internet protocol (Internet Protocol, IP) address. S103 and SI04. The DHCP server sends a DHCP offer (offer) message to the CM by using the access node. The DHCP offer message includes an IP address that can be allocated to the CM for use. S105 and S106. The CM sends a DHCP request (request) message to the DHCP server by using the access node. The DHCP request message includes an IP address selected by the CM. S107 and SI08. The DHCP server sends a DHCP acknowledgement (acknowledgement, ACK) message to the CM by using the access node. The DHCP acknowledgment (acknowledgement, ACK) message includes an IP address of the CM, an IP address of a time of day (time of day, ToD) server, and an IP address of a trivial file transfer protocol (Trivial File Transfer Protocol, TFTP) server. S109. The CM sends a request message to the TFTP server. S110. The TFTP server sends a configuration file response message to the CM. The CM obtains a configuration file from the TFTP server by using S109 and S110. Sill. The CM sends a ToD request message to the ToD server. S112. The ToD server sends a ToD response message to the CM. The CM obtains a system time from the ToD server by using S111 and S112. S113. The CM registers with the access node by using the configuration file. S114. The access node sends a configuration file registration success message to the CM. Before the access node performs configuration file registration for the CM, the access node needs to perform pre-planning and manual configuration based on a service flow, so as to complete CM registration. The CM sends, to the CMTS by using S113 and S114, a parameter included in the configuration file, so that the CMTS establishes a forwarding service flow for the CM.

In the foregoing method, the registered CM can forward the service flow only when the access node completes service configuration. The service configuration of the access node requires service-based pre-planning and manual configuration. This reduces service configuration efficiency and service provisioning efficiency.

### SUMMARY

Embodiments of this application provide a service flow configuration method and an apparatus, to help improve service configuration efficiency and service provisioning efficiency.

According to a first aspect, a service flow configuration method is provided, and the method includes: receiving, by a control device, a first DHCP packet sent by a DHCP server, where the first DHCP packet includes an IP address of a server configured to provide a configuration file, an identifier of the configuration file, and a first IP address of a user-side terminal; obtaining, by the control device, a second DHCP packet based on the first DHCP packet, where the second DHCP packet includes an IP address of the control device, the identifier of the configuration file, and the first IP address; sending, by the control device, the second DHCP packet to the terminal; receiving, by the control device, a first request packet sent by the terminal, where the first request packet includes the identifier of the configuration file; obtaining, by the control device based on the identifier of the configuration file from the server configured to provide the configuration file, a configuration file corresponding to the terminal; and performing, by the control device, service configuration on the terminal and an access node based on the configuration file corresponding to the terminal.

The control device may be a virtual access node (virtual access node, vAN) control device or a configuration agent. The control device may be disposed outside the access node as an independent device, or may be disposed inside the access node. When the access node includes a CMC and an OLT, and the control device is disposed inside the access node, the control device may be disposed on the OLT of the access node.

In the foregoing method, the control device replaces, with the IP address of the control device, the IP address that is sent by the DHCP server and that is of the server configured to provide the configuration file. The control device may serve as a forwarding node between the user-side terminal and the server configured to provide the configuration file, and receive the configuration file corresponding to the terminal that is sent by the server configured to provide the configuration file. The control device separates configuration data of the access node and a configuration file of the terminal from the configuration file corresponding to the terminal, obtains a parameter set based on the configuration data of the access node, and performs service configuration on the access node by using the parameter set. The control device performs service configuration on the access node in a common process in which the user-side terminal obtains the configuration file, and does not need to manually configure the access node. This helps improve service configuration efficiency and service provisioning efficiency.

The service configuration of the terminal and the service configuration of the access node are used to complete configuration required by a service. In other words, the terminal and the access node that complete service configuration may cooperate to complete the service.

In a possible implementation, the obtaining, by the control device based on the identifier of the configuration file from the server configured to provide the configuration file, a configuration file corresponding to the terminal includes: generating, by the control device, a second request packet based on the first request packet, where the second request packet includes the identifier of the configuration file, and a destination address of the second request packet is the IP address of the server configured to provide the configuration file; sending, by the control device, the second request packet to the server configured to provide the configuration file; and receiving, by the control device, the configuration file corresponding to the terminal that is sent by the server configured to provide the configuration file. In this way, the control device may be used as an agent of the terminal to request, from the server configured to provide the configuration file, the configuration file corresponding to the terminal. This helps the control device intercept the configuration file corresponding to the terminal that is sent by the server configured to provide the configuration file.

The configuration file corresponding to the terminal includes two parts. A first part is a configuration file used to perform service configuration on the terminal, namely, the configuration file of the terminal. A second part is a parameter used to perform service configuration on the access node, namely, the parameter set of the access node. The access node is an access node required by the CM to complete a service.

In a possible implementation, the access node includes a CMC and an OLT, and the performing, by the control device, service configuration on the terminal and an access node based on the configuration file corresponding to the terminal includes: obtaining, by the control device through parsing, the configuration data of the access node from the configuration file corresponding to the terminal, where the configuration data of the access node is used to perform service configuration on the CMC and the OLT; generating, by the control device, a first parameter set and a second parameter set based on the configuration data of the access node, where the first parameter set is used to perform service configuration on the CMC, and the second parameter set is used to perform service configuration on the OLT; obtaining, by the control device, the configuration file of the terminal from the configuration file corresponding to the CM; and sending, by the control device, the first parameter set to the CMC, sending the second parameter set to the OLT, and sending the configuration file of the terminal to the terminal.

In a possible implementation, the access node is a CMTS and a CCAP, and the performing, by the control device, service configuration on the terminal and an access node based on the configuration file corresponding to the terminal includes: obtaining, by the control device through parsing, the configuration data of the access node from the configuration file corresponding to the terminal, where the configuration data of the access node is used to perform service configuration on the CMTS or the CCAP; generating, by the control device, a parameter set based on the configuration data of the access node, where the parameter set is used to perform service configuration on the CMTS or the CCAP; obtaining, by the control device, the configuration file of the terminal from the configuration file corresponding to the CM; and sending, by the control device, the parameter set to the access node, and sending the configuration file of the terminal to the terminal.

In a possible implementation, the method further includes: receiving, by the control device, a third DHCP packet from the access node, where the third DHCP packet includes a second IP address of the terminal; and sending, by the control device, the third DHCP packet to the DHCP server in a broadcast manner. The second IP address may be the same as the first IP address. In other words, the DHCP server determines to allocate the second IP address to the terminal. The control device may forward the third DHCP packet in a broadcast manner, so that the DHCP server determines that the terminal selects the IP address allocated by the DHCP server, and another DHCP server learns that the terminal does not select an IP address provided by the another DHCP server. The third DHCP message may further include an identifier of the DHCP server, and the DHCP server is a DHCP server to which the IP address selected by the terminal belongs.

According to a second aspect, a service flow configuration method is provided, and the method includes: sending, by a user-side terminal, a DHCP request packet to an access node, where the DHCP request packet includes a first IP address of the terminal; receiving, by the terminal, a DHCP response packet sent by the access node, where the DHCP response packet includes an IP address of a control device, an identifier of a configuration file, and a second IP address of the terminal; sending, by the terminal, a first request packet to the control device, where the first request packet includes the identifier of the configuration file, and a destination address of the first request packet is the IP address of the control device; receiving, by the terminal, a configuration file sent by the control device; and performing, by the terminal, service configuration based on the configuration file.

The user-side terminal may be a CM serving as a separate device or an embedded CM, and the embedded CM may be a CM in a set-top box. Alternatively, the user-side terminal may be an apparatus that has a same function as the CM. Details are not described herein by using an example.

In the foregoing method, the user-side terminal may request the configuration file from the control device based on the IP address of the control device that is included in the received DHCP response packet, so that the control device can intercept a parameter set of the access node. This helps obtain configuration data of the access node and perform service configuration on the access node in a process in which the terminal obtains the configuration file.

The first IP address may be the same as the second IP address. To be specific, the DHCP server determines to re-add the pre-allocated first IP address to the DHCP response packet as the second IP address, and allocate the second IP address to the terminal. Alternatively, the first IP address may be different from the second IP address. To be specific, the DHCP server no longer provides the pre-allocated first IP address for the terminal for use, but allocates a new IP address, namely, the second IP address, to the terminal for use.

In a possible implementation, the sending, by a terminal, a DHCP request packet to an access node includes: sending, by the terminal, the DHCP request packet to the access node in a broadcast manner. In other words, a destination address of the DHCP request packet is a broadcast address. The access node is configured to forward the DHCP request packet to the control device. In this way, in a process of requesting an IP address, the terminal may not perceive existence of the control device, but obtain, by using a common DHCP process, the second IP address allocated by the DHCP server. A difference from the common DHCP process lies in that the terminal obtains, in the DHCP process, no IP address of a server configured to provide a configuration file, but obtains the IP address of the control device.

In a possible implementation, the DHCP request packet further includes an identifier of the DHCP server, and the identifier of the DHCP server is used to indicate the selected DHCP server. The DHCP request packet may be sent in a broadcast manner. In this way, a DHCP server in a network may determine, based on the identifier of the DHCP server in the DHCP request packet, whether the DHCP server is selected to provide an IP address.

According to a third aspect, a service flow configuration method is provided, and the method includes: obtaining, by an access node, a parameter set of the access node from a control device, where the parameter set of the access node is a parameter set that is used to perform service configuration and that is obtained in a process in which a user-side terminal obtains a configuration file; and performing, by the access node, service configuration based on the parameter set.

In a possible implementation, before the obtaining, by an access node, a parameter set of the access node from a control device, the method further includes: receiving, by the access node, a DHCP request packet sent by the terminal, where the DHCP request packet includes a first IP address of the terminal; forwarding, by the access node, the DHCP request packet to the control device; receiving, by the access node, a DHCP response packet sent by the control device, where the DHCP response packet includes an IP address of the control device, an identifier of a configuration file, and a second IP address of the terminal; and forwarding, by the access node, the DHCP response packet to the terminal.

In the foregoing method, in a DHCP process, the access node may replace the terminal to communicate with the control device, so as to obtain, by using the control device, the IP address allocated by a DHCP server to the terminal. In a service configuration process, the access node may implement service configuration without manual configuration, and the access node may implement service configuration by using the control device in a process in which the terminal obtains the configuration file.

According to a fourth aspect, a control device is provided, and the control device includes: a first receiving unit, configured to receive a first DHCP packet sent by a DHCP server, where the first DHCP packet includes an IP address of a server configured to provide a configuration file, an identifier of the configuration file, and a first IP address of a user-side terminal; a first obtaining unit, configured to obtain a second DHCP packet based on the first DHCP packet, where the second DHCP packet includes an IP address of the control device, the identifier of the configuration file, and the first IP address; a first sending unit, configured to send the second DHCP packet to the terminal; a second receiving unit, configured to receive a first request packet sent by the terminal, where the first request packet includes the identifier of the configuration file; a second obtaining unit, configured to obtain, based on the identifier of the configuration file from the server configured to provide the configuration file, a configuration file corresponding to the terminal; and a configuration unit, configured to perform service configuration on the terminal and an access node based on the configuration file corresponding to the terminal.

In a possible implementation, the control device further includes a unit configured to implement any possible implementation of the first aspect.

According to a fifth aspect, a user-side terminal is provided, and the terminal includes: a first sending unit, configured to send a DHCP request packet to an access node, where the DHCP request packet includes a first IP address of the terminal; a first receiving unit, configured to receive a DHCP response packet sent by the access node, where the DHCP response packet includes an IP address of a control device, an identifier of a configuration file, and a second IP address of the terminal; a second sending unit, configured to send a first request packet to the control device, where the first request packet includes the identifier of the configuration file, and a destination address of the first request packet is the IP address of the control device; a second receiving unit, configured to receive a configuration file sent by the control device; and a configuration unit, configured to perform service configuration based on the configuration file.

In a possible implementation, the user-side terminal further includes a unit configured to implement any possible implementation of the second aspect.

According to a sixth aspect, an access node is provided, and the access node includes: an obtaining unit, configured to obtain a parameter set of the access node from a control device, where the parameter set of the access node is a parameter set that is used to perform service configuration and that is obtained in a process in which a user-side terminal obtains a configuration file; and a configuration unit, configured to perform service configuration based on the parameter set.

In a possible implementation, the access node further includes a unit configured to implement any possible implementation of the third aspect.

According to a seventh aspect, a control device is provided, and the control device includes a processor and a memory configured to store a program instruction. The processor reads the program instruction in the memory, to perform the method according to any one of the first aspect or the possible implementations of the first aspect.

According to an eighth aspect, a user-side terminal is provided, and the terminal includes a processor and a memory configured to store a program instruction. The processor reads the program instruction in the memory, to perform the method according to any one of the second aspect or the possible implementations of the second aspect.

According to a ninth aspect, an access node is provided, and the access node includes a processor and a memory configured to store a program instruction. The processor reads the program instruction in the memory, to perform the method according to any one of the third aspect or the possible implementations of the third aspect.

According to a tenth aspect, a computer-readable storage medium is provided. The computer-readable storage medium stores an instruction. When the instruction is run on a computer, the computer is enabled to perform the method according to any one of the first aspect or the possible implementations of the first aspect.

According to an eleventh aspect, a computer-readable storage medium is provided. The computer-readable storage medium stores an instruction. When the instruction is run on a computer, the computer is enabled to perform the method according to any one of the second aspect or the possible implementations of the second aspect.

According to a twelfth aspect, a computer-readable storage medium is provided. The computer-readable storage medium stores an instruction. When the instruction is run on a computer, the computer is enabled to perform the method according to any one of the third aspect or the possible implementations of the third aspect.

According to a thirteenth aspect, a service flow configuration system is provided. The system includes the control device according to any one of the fourth aspect or the possible implementations of the fourth aspect and the access node according to any one of the sixth aspect or the possible implementations of the sixth aspect.

According to a fourteenth aspect, a service flow configuration system is provided. The system includes the control device according to any one of the seventh aspect or the possible implementations of the seventh aspect and the access node according to any one of the ninth aspect or the possible implementations of the ninth aspect.

### BRIEF DESCRIPTION OF DRAWINGS

FIG. 1 is a flowchart of existing CM registration;
FIG. 2 is a flowchart of a service flow configuration method according to Embodiment 1 of this application;
FIG. 3 is a flowchart of a service flow configuration method according to Embodiment 2 of this application;
FIG. 4 is a schematic structural diagram of a control device according to an embodiment of this application;
FIG. 5 is a schematic structural diagram of a CM according to an embodiment of this application;
FIG. 6 is a schematic structural diagram of an access node according to an embodiment of this application;
FIG. 7 is a schematic structural diagram of a control device according to an embodiment of this application;
FIG. 8 is a schematic structural diagram of a CM according to an embodiment of this application;
FIG. 9 is a schematic structural diagram of an access node according to an embodiment of this application; and
FIG. 10 is a schematic structural diagram of a service flow configuration system according to an embodiment of this application.

### DESCRIPTION OF EMBODIMENTS

The following describes the embodiments of the present invention with reference to accompanying drawings.

An embodiment of this application provides a service flow configuration method. In the method, in a DHCP process of a user-side terminal, a control device may obtain an IP address that is sent by a DHCP server to the terminal and that is of a server configured to provide a configuration file. The control device does not send, to the terminal, the IP address of the server configured to provide the configuration file. The control device sends, to a CM, an IP address of the control device and an IP address allocated by the DHCP server to the CM. The CM sends a first request message to the control device based on the IP address of the control device. The first request message is used to request a configuration file used for service configuration. The control device obtains, based on the first request message from the server configured to provide the configuration file, a configuration file corresponding to the terminal. The control device may obtain configuration data of an access node and a configuration file of the terminal from the configuration file corresponding to the terminal. The control device obtains a parameter set of the access node based on the configuration data of the access node, and performs service configuration on the access node by using the parameter set. The control device may send the configuration file of the terminal to the terminal, so that the terminal performs service configuration by using the configuration file of the terminal. In this way, in a process in which the terminal obtains the configuration file, the control device can perform service configuration on the access node. This helps improve service configuration efficiency and service provisioning efficiency.

### Embodiment 1

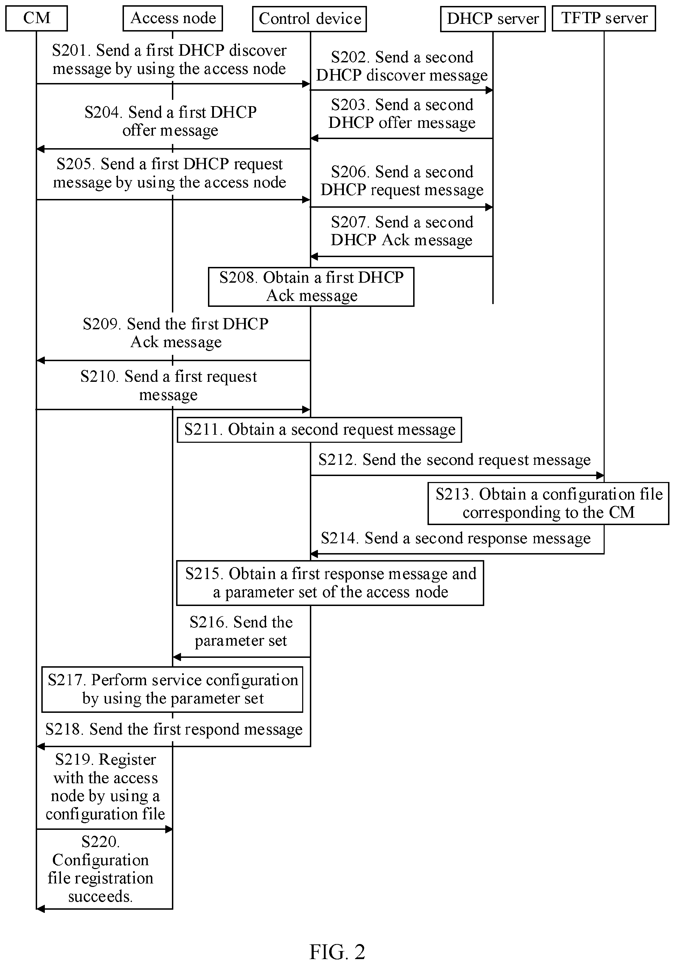

FIG. 2 is a flowchart of a service flow configuration method according to Embodiment 1 of this application. A control device in Embodiment 1 is a device externally disposed on an access node, and may be a vAN controller or another apparatus having a similar function. The following describes, with reference to FIG. 2, the service flow configuration method provided in Embodiment 1 of this application.

S201. A CM sends a first DHCP discover message by using the access node.

For example, the access node is a node through which the CM accesses a network in a process in which the CM completes a service. The first DHCP discover message is used to request a DHCP server to allocate an IP address to the CM. In an internet protocol version 4 (Internet Protocol version 4, IPv4) scenario, for a format of the first DHCP discover message, refer to a format of a DHCP message in RFC 2131. Content related to this part in the document is incorporated into this specification in an introduction manner, like overall copy. For brevity, details are not described herein. In an internet protocol version 6 (Internet Protocol version 6, IPv6) scenario, for a format of the first DHCP discover message, refer to a format of a DHCP message in RFC 3315. Content related to this part in the document is incorporated into this specification in an introduction manner, like overall copy. For brevity, details are not described herein. When there are a plurality of CMs in the network, the first DHCP discover message may carry an identifier of the CM. The identifier of the CM may be a hardware address or an identifier of another type, for example, a name.

For example, when a control plane of the access node is centralized into the control device, the access node sends the first DHCP discover message to the control device, to perform DHCP relay processing. For example, the access node may send, to the control device, a media access control (Media Access Control, MAC) address of the CM and information about an interface that receives the DHCP message. When a control plane of the access node is not centralized into the control device, the access node may add, to an option 82 field of the first DHCP discover message, a MAC address of the CM and information about an interface used by the access node to receive the DHCP message. A specific meaning of the option 82 field is as follows: 82.1 Circuit ID indicates the information about the interface that receives the DHCP message. 82.2 Remote ID indicates the MAC address of the CM corresponding to the DHCP message. 82.9 CMC Capability describes a CMC capability, such as a C-DOCSIS version. The access node may write the MAC address of the CM into an 82.2 Remote ID field included in the option 82 field.

Before S201, the CM may complete distance measurement with the access node through scanning. For details, refer to corresponding content in the C-DOCSIS technical specification (GY/T 266-2012). Content related to this part in the document is incorporated into this specification in an introduction manner, like overall copy. For brevity, details are not described herein.

S202. The control device sends a second DHCP discover message to the DHCP server.

For example, after receiving the first DHCP discover message from the access node, the control device obtains the second DHCP discover message. The control device may add interface information of the control device to the option 82 field of the first DHCP discover message, to obtain the second DHCP discover message. Alternatively, the control device adds, to the option 82 field of the first DHCP discover message, the MAC address of the CM and the information about the interface used by the access node to receive the DHCP message, to obtain the second DHCP discover message. Optionally, the control device may send the second DHCP discover message in a broadcast manner, so that the DHCP server in the network provides an IP address for the CM. When there are a plurality of CMs in the network, the second DHCP discover message may include the identifier of the CM.

S203. The DHCP server sends a second DHCP offer message to the control device.

For example, after receiving the second DHCP discover message sent by the control device, the DHCP server obtains an unoccupied IP address from an IP address pool as a first IP address. The first IP address is an IP address pre-allocated by the DHCP server to the CM. The DHCP server generates the second DHCP offer message based on the first IP address. The second DHCP offer message includes the first IP address. The DHCP server sends the second DHCP offer message to the control device. When there are a plurality of CMs in the network, the second DHCP offer message may include the identifier of the CM, so that the CM can identify a message in received messages that needs to be processed by the CM. When there are a plurality of DHCP servers in the network, the second DHCP offer message may further include an identifier of the DHCP server.

S204. The control device sends a first DHCP offer message to the CM.

For example, after receiving the second DHCP offer message, the control device obtains the first DHCP offer message. Content of a hop count (hops) field in the first DHCP offer message is different from that in the second DHCP offer message. The hop count field is used to record a quantity of relays through which a DHCP packet to which the hop count field belongs passes. The control device may send the first DHCP offer message to the CM by using the access node. Both the control device and the access node may send the first DHCP offer message to the CM in a common DHCP offer message sending manner, that is, in a broadcast manner. The first DHCP offer message includes the first IP address. When there are a plurality of DHCP servers in the network, the first DHCP offer message further includes the identifier of the DHCP server. When there are a plurality of CMs in the network, the first DHCP offer message further includes the identifier of the CM.

S205. The CM sends a first DHCP request message by using the access node.

For example, after receiving the first DHCP offer message, the CM obtains the first IP address from the first DHCP offer message. After selecting to use the DHCP server that sends the first DHCP offer message, the CM generates the first DHCP request message. The first DHCP request message includes the first IP address and the identifier of the CM. The identifier of the CM in the first DHCP request message is used to obtain an identifier of a configuration file from the DHCP server. The first DHCP request message is used to request the DHCP server to allocate the first IP address to the CM. The CM sends the first DHCP request message to the access node. The CM may determine, by using the identifier of the CM in the first DHCP offer message, that the first IP address is allocated to the CM. When there are a plurality of DHCP servers in the network, the first DHCP request message further includes the identifier of the DHCP server, so that an unselected DHCP server in the network can learn that an IP address allocated by the unselected DHCP server is not selected.

S206. The control device sends a second DHCP request message to the DHCP server.

For example, the control device generates the second DHCP request message based on the first DHCP request message. The second DHCP request message is a broadcast packet. The control device sends the second DHCP request message to the DHCP server in a broadcast manner. The second DHCP request message includes the first IP address and the identifier of the CM. When there are a plurality of DHCP servers in the network, the second DHCP request message further includes the identifier of the DHCP server.

S207. The DHCP server sends a second DHCP Ack message to the control device.

For example, the DHCP server determines, based on the second DHCP request message, that the first IP address can be allocated to the CM. The DHCP server generates the second DHCP Ack message. The second DHCP Ack message includes a second IP address, an IP address of a TFTP server, and the identifier of the configuration file. The second IP address is the same as the first IP address. The TFTP server is configured to provide configuration data required by the CM and the access node to complete a service. The CM and the node jointly complete the service. When there are a plurality of DHCP servers in the network, the DHCP server may determine, based on the identifier of the DHCP server in the second DHCP request message, that the CM selects the IP address allocated by the DHCP server.

In an implementation, the DHCP server may store a correspondence, and the correspondence includes the identifier of the CM and the identifier of the configuration file. If the second DHCP request message includes the identifier of the CM, the DHCP server obtains the identifier of the configuration file based on the identifier of the CM and the correspondence. If the second DHCP request message includes no identifier of the CM, the DHCP server may learn, based on the first IP address included in the second DHCP request message and the second DHCP discover message, that the first IP address and the identifier of the CM correspond to a same CM. The DHCP server obtains the identifier of the configuration file based on the identifier of the CM and the correspondence.

For example, if the DHCP server cannot provide the pre-allocated IP address, namely, the first IP address, for the CM for use, the DHCP server reselects an IP address, namely, the second IP address, and provides the second IP address for the CM for use.

S208. The control device obtains a first DHCP Ack message.

For example, the control device generates the first DHCP Ack message based on the second DHCP Ack message. The first DHCP Ack message includes the second IP address, an IP address of the control device, and the identifier of the configuration file. In other words, the control device replaces the IP address of the TFTP server with the IP address of the control device. The first DHCP Ack message is used to send, to the CM, the IP address that can be used by the CM.

S209. The control device sends the first DHCP Ack message to the CM.

For example, the control device may send the first DHCP Ack message to the access node in a broadcast manner. When there are a plurality of CMs in the network, the first DHCP Ack message may carry the identifier of the CM. The access node may forward the first DHCP Ack message to the CM.

S210. The CM sends a first request message to the control device.

For example, the CM generates the first request message based on the IP address of the control device. A destination IP address of the first request message is the IP address of the control device. A source address of the first request message is the second IP address. The first request message includes the identifier of the configuration file. The first request message is used to request a configuration file from the TFTP server. When there are a plurality of CMs in the network, the CM may determine, by using the identifier of the CM that is carried in the first DHCP Ack message, that data in the first DHCP Ack message is data allocated to the CM. In a DHCP process, the control device replaces, with the IP address of the control device, the IP address of the TFTP server that is sent by the DHCP server to the CM. In this way, the CM requests the configuration file based on the IP address of the control device, and the control device may be used as an agent between the CM and the TFTP server, to obtain configuration data of the access node from the TFTP server, so as to perform service configuration on the access node.

S211. The control device obtains a second request message.

For example, the control device replaces the destination IP address in the first request message with the IP address of the TFTP server, and replaces the source IP address in the first request message with the IP address of the control device, to obtain the second request message. The second request message includes the identifier of the configuration file. Optionally, to implement verification performed by the TFTP server on the CM, the second request message may further include the second IP address. The second IP address may be added to the first request message when the CM generates the first request message, or may be added to the second request message when the control device generates the second request message.

S212. The control device sends the second request message to the TFTP server.

The control device may be used as an agent of the CM and the access node to request, from the TFTP server, a configuration file corresponding to the CM.

S213. The TFTP server obtains the configuration file corresponding to the CM.

For example, the TFTP server obtains, based on the identifier that is of the configuration file and that is included in the second request message, the configuration file corresponding to the CM. The configuration file corresponding to the CM includes a configuration file of the CM and the configuration data of the access node. The TFTP server may store a correspondence, and the correspondence includes the identifier of the configuration file, the configuration file of the CM, and the configuration data of the access node.

Optionally, the TFTP may further verify the CM based on the second IP address included in the second request message. After the verification performed on the CM succeeds, the TFTP server may obtain, by using the identifier of the configuration file, the configuration file corresponding to the CM.

For example, the access node is of a distributed structure. To be specific, the access node includes an OLT and a CMC. Correspondingly, the configuration data of the access node includes configuration data used to perform service configuration on the OLT and configuration data used to perform service configuration on the CMC. Alternatively, the access node is a CMTS or a CCAP. Correspondingly, the configuration data of the access node is configuration data used to perform service configuration on the CMTS or is configuration data used to perform service configuration on the CCAP.

For example, a home access service such as a high-speed internet (high-speed Internet, HSI) service may be provisioned on the CM, and the access node includes the OLT and the CMC. There is a gigabit-capable passive optical network (gigabit-capable passive optical network, GPON) connection between the OLT and the CMC. Configuration that needs to be performed on the CM and the access node corresponding to the CM includes conversion from a data over cable service interface specification (data over cable service interface specification, DOCSIS) packet to an Ethernet (Ethernet, ETH) packet. Configuration that needs to be performed on the access node includes establishment of a service channel between the OLT and the CMC. Related configuration that needs to be performed on the CMC includes: creating a service VLAN for the CM and adding a corresponding uplink port to the service VLAN. The service VLAN for the CM is used to identify a service flow of the CM. Optionally, the related configuration that needs to be performed on the CMC may further include a mapping relationship from an uplink service flow reference (service flow reference) identifier to a VLAN or a mapping relationship from a service class name (service class name) to a VLAN ID. Optionally, the related configuration that needs to be performed on the CMC may further include a mapping relationship from an uplink service flow priority (Traffic Priority) or a service class (Service Class)-defined priority to an 802.1p priority. Related configuration that needs to be performed on the OLT includes: a service VLAN, adding a corresponding uplink port to the service VLAN, a user-side VLAN (an uplink VLAN for the CMC), and a GEM port ID corresponding to a service of the CM.

For example, a layer 2 virtual private network (Layer 2 virtual private network, L2VPN) enterprise access service may be provisioned on the CM, and the access node includes the OLT and the CMC. Configuration that needs to be performed on the CM includes: creating a service VLAN for the CM and adding a corresponding uplink port to the service VLAN. Configuration that needs to be performed on the access node includes: configuring an L2VPN service channel between the OLT and the CMC, and configuring a CM management service channel between the OLT and the CMC. The L2VPN service channel is used to forward a DHCP packet and an L2VPN service packet. The CM management service channel is used to forward a CM management packet and a video on demand (Video On Demand, VOD) packet. Related configuration that needs to be performed on the OLT includes: an L2VPN service VLAN, adding a corresponding uplink port to the L2VPN service VLAN, a user-side VLAN, and a GEM port ID corresponding to an L2VPN service. Related configuration that needs to be performed on the CMC includes: an L2VPN service VLAN, adding a corresponding uplink port to the L2VPN service VLAN, a CM management packet VLAN, and adding a corresponding uplink port to the CM management packet VLAN.

S214. The TFTP server sends a second response message to the control device.

For example, the second response message includes the configuration file corresponding to the CM. For a specific parameter included in the configuration file corresponding to the CM, refer to corresponding content in S213. A destination IP address of the second response message is the IP address of the control device.

S215. The control device obtains a first response message and a parameter set of the access node.

For example, the control device may obtain the configuration data of the access node from the second response message. The control device may delete the configuration data of the access node that is included in the second response message, to obtain the first response message. The first response message includes only the configuration file of the CM. A destination IP address of the first response message obtained by the control device is the second IP address. The control device may process the configuration data of the access node, to obtain a parameter that can be directly used by the access node, namely, the parameter set of the access node. For example, if the access node is distributed, in other words, if the access node includes the CMC and the OLT, the parameter set includes a first parameter set and a second parameter set. The first parameter set is used to configure the CMC. The second parameter set is used to configure the OLT. If the access node is centralized, the parameter set is used to configure the CMTS or the CCAP.

S216. The control device sends the parameter set to the access node.

For example, the access node is distributed. For example, the access node includes the OLT and the CMC. The control device may send the first parameter set to the CMC, and send the second parameter set to the OLT. If the access node is centralized, for example, the access node is the CMTS or the CCAP, the control device sends the parameter set to the CMTS or the CCAP.

S217. The access node performs service configuration by using the parameter set.

For example, if the access node is distributed, the OLT performs service configuration by using the second parameter set, and the CMC performs service configuration by using the first parameter set. For configuration performed by the OLT and the CMC, refer to corresponding content in S212. If the access node is centralized, the CMTS or the CCAP performs service configuration by using the parameter set from the control device.

S218. The control device sends the first response message to the CM.

For example, the control device sends the first response message to the CM based on the second IP address by using the access node. In the method provided in this embodiment of this application, the control device may be used as the agent of the CM and the access node, to complete configuration of the access node in addition to helping the CM obtain the configuration file required for configuration of the CM. This helps improve service configuration efficiency and service provisioning efficiency.

S219. The CM registers with the access node by using the configuration file.

S220. The access node notifies the CM that configuration file registration succeeds.

For specific implementations of S219 and S220, refer to ETSI EN 302 878-4 V1.1.1 (2011-11). Content related to this part in the document is incorporated into this specification in an introduction manner, like overall copy. For brevity, details are not described herein. For example, the CM sends a registration request message to a radio frequency interface module included in the access node. The registration request message includes detailed information about a capability of the CM and a requested QoS resource. The requested QoS resource may be from the configuration file delivered by the TFTP server. The radio frequency interface module included in the access node processes the registration request message. For example, the radio frequency interface module determines a response to each capability of the CM, and determines whether the QoS resource requested by the CM can be provided. A processing result of the radio frequency interface module is expressed in a form of a registration reply message. The registration reply message may be encapsulated in a "CDMM REGISTRATION REQUEST" message and sent to a control module included in the access node. If the radio frequency interface module agrees with a requested flow, the control module needs to determine whether to authorize and support the requested QoS resource. For example, the control module needs to check that a classification and forwarding module included in the access node can support a requested classifier. The control module sends a "CDMM REGISTRATION REQUEST" message to the radio frequency interface module, to indicate a processing result. Through instruction of the control module, the radio frequency interface module completes a registration process, in other words, notifies the CM that the configuration file registration succeeds.

In this embodiment of this application, the control device externally disposed on the access node may be used as an agent of the CM, for example, an agent between the CM and the TFTP server, or an agent between the CM and the DHCP server. In a process in which the CM requests the IP address from the DHCP server, the control device may replace, with the IP address of the control device, the IP address of the TFTP server that is sent by the DHCP server. In this way, the CM can request the configuration file from the control device by using the IP address of the control device. The control device may be used as the agent of the CM to request the configuration file from the TFTP server. The TFTP server may send the configuration file of the CM and the configuration data of the access node to the control device, so that the access node and the CM can perform service configuration by using one procedure. This can avoid complex manual configuration, and improve service configuration efficiency and service provisioning efficiency.

### Embodiment 2

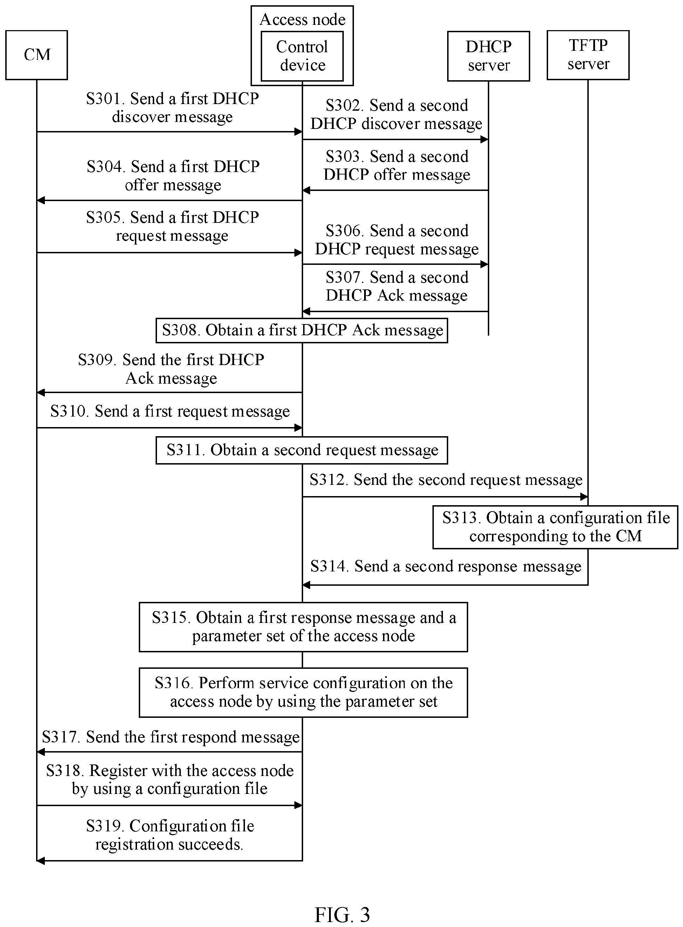

FIG. 3 is a flowchart of a service flow configuration method according to Embodiment 2 of this application. A control device in Embodiment 2 may be an apparatus, a chip, or a module built in an access node. The control device may use an IP address of the access node as an IP address of the control device, or the control device uses an IP address different from an IP address of the access node. A chip or a module that is included in the access node in Embodiment 2 and that is related to CM service implementation is the same as that in the access node in Embodiment 1. The following describes, with reference to FIG. 3, the service flow configuration method provided in Embodiment 2 of this application.

S301. A CM sends a first DHCP discover message to the control device.

For example, the CM sends the first DHCP discover message to the access node in a unicast manner. The control device built in the access node may receive the first DHCP discover message sent in a unicast manner. When there are a plurality of CMs in a network, the first DHCP discover message may include an identifier of the CM.

S302. The control device sends a second DHCP discover message to a DHCP server.

For example, the control device may add, to an option 82 field of the first DHCP discover message, a MAC address of the CM and information about an interface that receives the DHCP message, to generate the second DHCP discover message. For details, refer to corresponding content in S201 and S202. The control device sends the second DHCP discover message to the DHCP server in a broadcast manner. When there are a plurality of CMs in the network, the second DHCP discover message may include the identifier of the CM.

S303. The DHCP server sends a second DHCP offer message to the control device.

S304. The control device sends a first DHCP offer message to the CM.

In S301 to S304, the control device is built in the access node, and therefore the control device may directly communicate with the CM without forwarding by another node. This helps improve service configuration efficiency.

S305. The CM sends a first DHCP request message to the control device.

S306. The control device sends a second DHCP request message to the DHCP server.

S307. The DHCP server sends a second DHCP Ack message to the control device.

S308. The control device obtains a first DHCP Ack message.

S309. The control device sends the first DHCP Ack message to the CM.

S310. The CM sends a first request message to the control device.

S311. The control device obtains a second request message.

S312. The control device sends the second request message to the TFTP server.

S313. The TFTP server obtains a configuration file corresponding to the CM.

S314. The TFTP server sends a second response message to the control device.

S315. The control device obtains a first response message and a parameter set of the access node.

For specific content of S304 to S315 in Embodiment 2, refer to corresponding content of S204 to S215 in Embodiment 1. Details are not described herein again.

S316. The control device performs service configuration on the access node by using the parameter set.

For example, the access node is distributed. For example, the access node includes an OLT and a CMC, the parameter set obtained in S314 includes a first parameter set and a second parameter set, the first parameter set is used to configure the CMC, and the second parameter set is used to configure the OLT. The control device performs service configuration on the CMC by using the first parameter set, and performs service configuration on the OLT by using the second parameter set. If the access node is centralized, for example, the access node includes a CMTS or a CCAP, the control device may configure the CMTS or the CCAP by using the parameter set. For specific content of the parameter set, refer to corresponding content in Embodiment 1.

S317. The control device sends the first response message to the CM.

S318. The CM registers with the access node by using the configuration file.

S319. The access node notifies the CM that configuration file registration succeeds.

For S317 in Embodiment 2, refer to content of S218 in Embodiment 1. For content of S318 in Embodiment 2, refer to content of S219 in Embodiment 1. For content of S319 in Embodiment 2, refer to S220 in Embodiment 1.

In this embodiment of this application, the control device built in the access node may be used as a communications node between the CM and another server, for example, between the CM and the TFTP server, or between the CM and the DHCP server. In a process in which the CM requests an IP address from the DHCP server, the control device may replace, with the IP address of the control device, an IP address of the TFTP server that is sent by the DHCP server. In this way, the CM can request the configuration file from the control device by using the IP address of the control device. The control device may be used as an agent of the CM to request the configuration file from the TFTP server. Even if the control device is built in the access node, before the access node performs service configuration, the CM can still obtain, from the TFTP server, the configuration file required by the CM. In other words, service configuration of the access node and service configuration of the CM are implemented by using one procedure. This can avoid complex manual configuration, and improve service configuration efficiency and service provisioning efficiency. The method provided in Embodiment 2 can be compatible with a current operator specific service (operator specific service, OSS) system. The CM and the access node can be configured in one procedure without a relatively great change to the OSS system, and an existing maintenance operation method keeps being used.

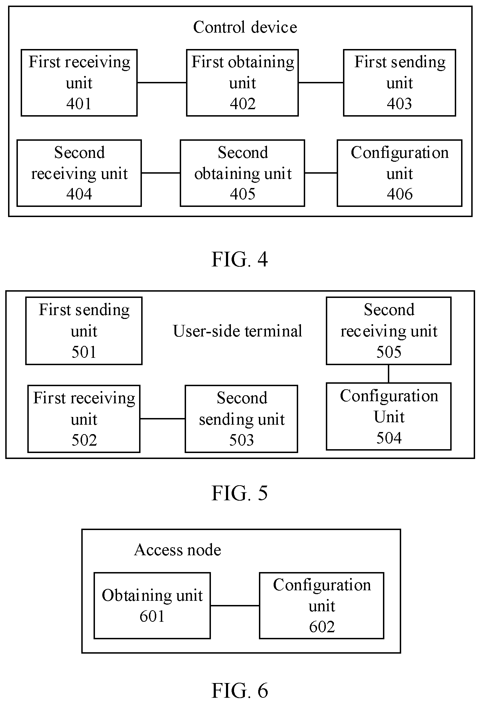

FIG. 4 is a schematic structural diagram of a control device according to an embodiment of this application. The control device provided in this embodiment of this application may be the apparatus externally disposed on the access node in Embodiment 1, or may be the apparatus, the chip, or the module built in the access node in Embodiment 2. For specific content in this embodiment of this application, refer to content related to the control device in Embodiment 1 or Embodiment 2. The following describes, with reference to FIG. 4, the control device provided in this embodiment of this application.

The control device provided in this embodiment of this application includes a first receiving unit 401, a first obtaining unit 402, a first sending unit 403, a second receiving unit 404, a second obtaining unit 405, and a configuration unit 406.

The first receiving unit 401 is configured to receive a first DHCP response packet sent by a DHCP server, where the first DHCP response packet includes an IP address of a server configured to provide a configuration file, an identifier of the configuration file, and a second IP address of a user-side terminal. The user-side terminal may be the CM in Embodiment 1 or Embodiment 2, or a device having a same or similar function as the CM. The first DHCP response packet may be the second DHCP Ack message in Embodiment 1 or Embodiment 2.

The first obtaining unit 402 is configured to generate a second DHCP response packet based on the first DHCP response packet, where the second DHCP response packet includes an IP address of the control device, the identifier of the configuration file, and the IP address of the terminal. The second DHCP response packet may be the first DHCP Ack message in Embodiment 1 or Embodiment 2.

The first sending unit 403 is configured to send the second DHCP response packet to the terminal. For details, refer to S209 in Embodiment 1 or S309 in Embodiment 2.

The second receiving unit 404 is configured to receive a first request packet sent by the terminal, where the first request packet includes the identifier of the configuration file. A destination address of the first request packet is the IP address of the control device.

The second obtaining unit 405 is configured to obtain, based on the identifier of the configuration file from the server configured to provide the configuration file, a configuration file corresponding to the terminal. The second obtaining unit 405 may obtain, from the TFTP server by using S211 to S214 in Embodiment 1, the configuration file corresponding to the CM. Alternatively, the second obtaining unit 405 may obtain, from the TFTP server by using S311 to S314 in Embodiment 2, the configuration file corresponding to the CM. In this embodiment, the configuration file corresponding to the terminal is the configuration file corresponding to the CM in Embodiment 1 or Embodiment 2, and includes a configuration file of the terminal and configuration data of the access node. The server configured to provide the configuration file in this embodiment may be the TFTP server in Embodiment 1 or Embodiment 2.

The second obtaining unit 405 is specifically configured to: generate a second request packet based on the first request packet, where the second request packet includes the identifier of the configuration file, and a destination address of the second request packet is the IP address of the server configured to provide the configuration file; send the second request packet to the server configured to provide the configuration file; and receive the configuration file corresponding to the terminal that is sent by the server configured to provide the configuration file.

The configuration unit 406 is configured to perform service configuration on the terminal and the access node based on the configuration file corresponding to the terminal. The configuration unit 406 may perform service configuration on the terminal and the access node by using S216 and S218 in Embodiment 1. Alternatively, the configuration unit 406 may perform service configuration on the terminal and the access node by using S316 and S317 in Embodiment 2.

In an implementation, the access node includes a CMC and an OLT, and the configuration unit 406 is specifically configured to: obtain the configuration data of the access node from the configuration file corresponding to the terminal; generate a first parameter set and a second parameter set based on the configuration data of the access node, where the first parameter set is used to perform service configuration on the CMC, and the second parameter set is used to perform service configuration on the OLT; obtain the configuration file of the terminal from the configuration file corresponding to the terminal; and send the first parameter set to the CMC, send the second parameter set to the OLT, and send the configuration file of the terminal to the terminal.

In another implementation, the access node is a CMTS or a CCAP, and the configuration unit 406 is specifically configured to: obtain the configuration data of the access node from the configuration file corresponding to the terminal; generate a third parameter set based on the configuration data of the access node, where the third parameter set is used to perform service configuration on the CMTS or the CCAP; obtain the configuration file of the terminal from the configuration file corresponding to the terminal; and send the third parameter set to the access node, and send the configuration file of the terminal to the terminal.

In an implementation, the control device further includes: a third access unit, configured to receive a DHCP request packet sent by the CM, where the DHCP request packet includes a first IP address of the CM, and the first IP address is an IP address sent by the DHCP server to the CM by using a DHCP offer message; and a second sending unit, configured to send the DHCP request packet to the DHCP server in a broadcast manner. The DHCP request packet may be the second DHCP request packet in Embodiment 1 or Embodiment 2.

FIG. 5 is a schematic structural diagram of a user-side terminal according to an embodiment of this application. The terminal in this embodiment may be the CM in Embodiment 1 or Embodiment 2. For specific content in this embodiment of this application, refer to content related to the CM in Embodiment 1 or Embodiment 2. The following describes, with reference to FIG. 5, the terminal provided in this embodiment of this application.

The terminal provided in this embodiment of this application includes a first sending unit 501, a first receiving unit 502, a second sending unit 503, a second receiving unit 505, and a configuration unit 504.

The first sending unit 501 is configured to send a DHCP request packet to an access node. The DHCP request packet may be the first DHCP request message in Embodiment 1 or Embodiment 2. The DHCP request packet includes a first IP address of the terminal. Optionally, the DHCP request packet further includes an identifier of the terminal. The IP address of the terminal may be from the first IP address carried in the first DHCP offer message in Embodiment 1 or Embodiment 2. The terminal may obtain the first IP address by using S201 to S204 in Embodiment 1, or the terminal obtains the first IP address by using S301 to S304 in Embodiment 2. The first sending unit 501 may send the DHCP request packet to the control device by using S205 in Embodiment 1 and by using the access node. Alternatively, the first sending unit 501 may send the DHCP request packet to the control device by using S305 in Embodiment 2 and by using the access node.

The first receiving unit 502 is configured to receive a DHCP response packet sent by the access node, where the DHCP response packet includes an IP address of the control device, an identifier of the configuration file, and a second IP address of the terminal. The DHCP response packet may be the first DHCP Ack message in Embodiment 1 or Embodiment 2. The first receiving unit 502 may obtain the second IP address, the IP address of the control device, and the identifier of the configuration file by using S209 in Embodiment 1 or S309 in Embodiment 2.

The second sending unit 503 is configured to send a first request packet to the control device, where the first request packet includes the identifier of the configuration file, and a destination address of the first request packet is the IP address of the control device. The first request packet may be the first request packet in Embodiment 1 or Embodiment 2. The second sending unit 503 may send the first request packet by using S210 in Embodiment 1 or S310 in Embodiment 2.

The second receiving unit 505 is configured to receive a configuration file sent by the control device. The second receiving unit 505 may obtain the configuration file by using S218 in Embodiment 1, or obtain the configuration file by using S317 in Embodiment 2.

The configuration unit 504 is configured to perform service configuration based on the configuration file. The configuration unit 504 may perform service configuration by using S218, S219, and S220 in Embodiment 1, or complete configuration by using S317, S318, and S319 in Embodiment 2.

FIG. 6 is a schematic structural diagram of an access node according to an embodiment of this application. The access node in this embodiment of this application may be the access node in Embodiment 1 or Embodiment 2. The following describes, with reference to FIG. 6, the access node provided in this embodiment of this application.

The access node in this embodiment of this application includes an obtaining unit 601 and a configuration unit 602. The obtaining unit 601 is configured to obtain a parameter set of the access node from a control device, where the parameter set of the access node is a parameter set that is used to perform service configuration and that is obtained in a process in which a user-side terminal obtains a configuration file. The configuration unit 602 is configured to perform service configuration based on the parameter set. For details, refer to S215 and S216 in Embodiment 1, or S315 in Embodiment 2.

When the control device is built in the access node, the obtaining unit 601 and the configuration unit 602 may be integrated into one module. In other words, the module can perform service configuration by using the parameter set obtained from the control device. Transmission of the parameter set belongs to data transmission inside the access node.

Optionally, the access node may further include a first receiving unit, a first sending unit, a second receiving unit, and a second sending unit. The first receiving unit is configured to receive a DHCP request packet sent by the user-side terminal, and the DHCP request packet includes a first IP address of the terminal. The first sending unit is configured to forward the DHCP request packet to the control device. The second receiving unit is configured to receive a DHCP response packet sent by the control device, the DHCP response packet includes an IP address of the control device, an identifier of the configuration file, and a second IP address of the terminal. The second sending unit is configured to forward the DHCP response packet to the terminal. The DHCP request packet may be the first DHCP request message in Embodiment 1 or Embodiment 2. The DHCP response packet may be the first DHCP response message in Embodiment 1 or Embodiment 2.

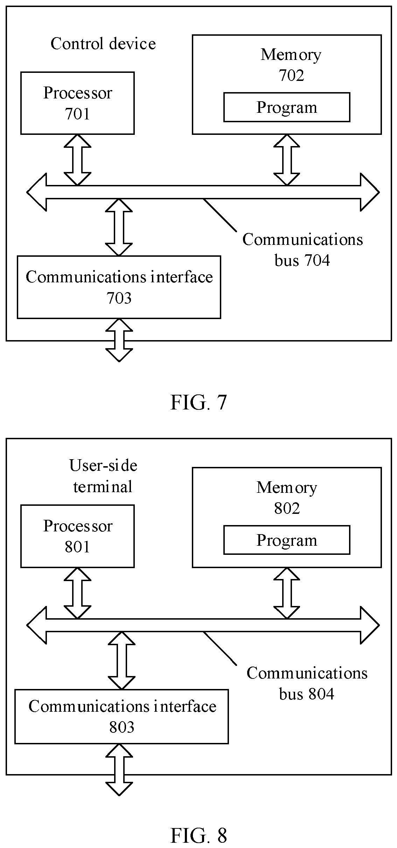

FIG. 7 is a schematic structural diagram of a control device according to an embodiment of this application. The control device provided in this embodiment of this application may be the control device in the embodiment corresponding to FIG. 4, and may perform the method performed by the control device in Embodiment 1 or Embodiment 2. In this embodiment of this application, a structure of the control device is described from a perspective of hardware implementation. The control device in this embodiment includes a processor 701, a memory 702, and a communications interface 703. The processor 701, the memory 702, and the communications interface 703 are connected by using a communications bus 704. The memory 702 is configured to store a program. The processor 701 performs, according to an executable instruction included in the program read from the memory 702, method steps performed by the control device in Embodiment 1 or Embodiment 2. The processor 701 may receive or send a message or a packet by using the communications interface 703. For details, refer to corresponding content in Embodiment 1 or Embodiment 2.

FIG. 8 is a schematic structural diagram of a user-side terminal according to an embodiment of this application. The terminal provided in this embodiment of this application may be the terminal in the embodiment corresponding to FIG. 5, and may perform the method performed by the CM in Embodiment 1 or Embodiment 2. In this embodiment of this application, a structure of the terminal is described from a perspective of hardware implementation. The terminal in this embodiment includes a processor 801, a memory 802, and a communications interface 803. The processor 801, the memory 802, and the communications interface 803 are connected by using a communications bus 804. The memory 802 is configured to store a program. The processor 801 performs, according to an executable instruction included in the program read from the memory 802, method steps performed by the CM in Embodiment 1 or Embodiment 2. The processor 801 may receive or send a message or a packet by using the communications interface 803. For details, refer to corresponding content in Embodiment 1 or Embodiment 2.

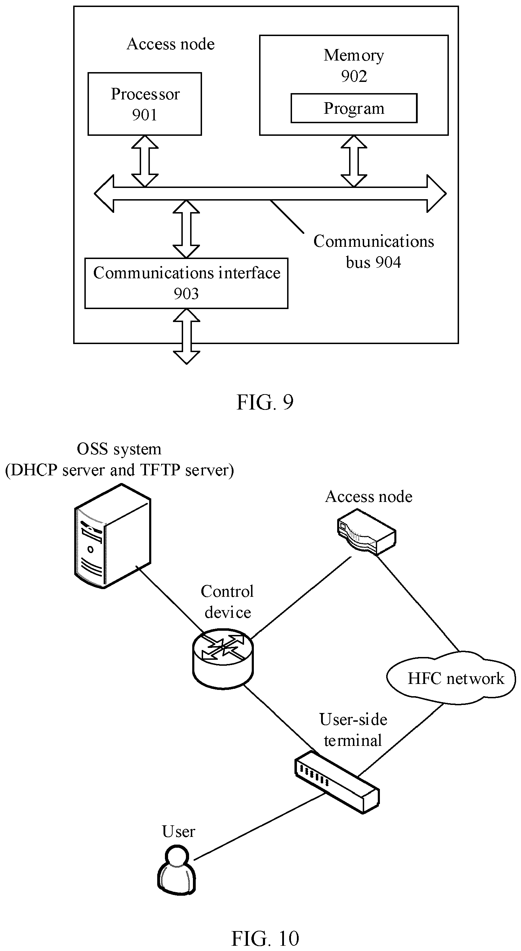

FIG. 9 is a schematic structural diagram of an access node according to an embodiment of this application. The access node provided in this embodiment of this application may be the access node in the embodiment corresponding to FIG. 6, and may perform the method performed by the access node in Embodiment 1 or Embodiment 2. In this embodiment of this application, a structure of the access node is described from a perspective of hardware implementation. The access node in this embodiment includes a processor 901, a memory 902, and a communications interface 903. The processor 901, the memory 902, and the communications interface 903 are connected by using a communications bus 904. The memory 902 is configured to store a program. The processor 901 performs, according to an executable instruction included in the program read from the memory 902, method steps performed by the access node in Embodiment 1 or Embodiment 2. The processor 901 may receive or send a message or a packet by using the communications interface 903. For details, refer to corresponding content in Embodiment 1 or Embodiment 2.

FIG. 10 is a schematic diagram of a network scenario according to an embodiment of this application. In the network scenario shown in FIG. 10, a control device may be the control device shown in FIG. 4 or FIG. 7, a terminal may be the terminal shown in FIG. 5 or FIG. 8, and an access node may be the access node shown in FIG. 6 or FIG. 9. An embodiment of this application further provides a service flow configuration system. The service flow configuration system includes the control device and the access node in FIG. 10. Optionally, the service flow configuration system may further include a DHCP server and a server that provides a configuration file. For specific implementations of devices in the system, refer to corresponding content in FIG. 2 and FIG. 3. For specific structures of these devices, refer to corresponding content in FIG. 4 to FIG. 9.

After the terminal and the access node provided in the embodiments of this application complete related service configuration, a service flow is created.

"First" and "second" in the foregoing embodiments of this application are used to distinguish between parameters, messages, and packets, and do not represent a sequence.

A general-purpose processor mentioned in the embodiments of this application may be a microprocessor or the processor may be any conventional processor. The steps in the methods disclosed with reference to the embodiments of the present invention may be directly performed by using a combination of hardware in the processor and a software module. When software is used for implementation, code for implementing the foregoing functions may be stored in a computer-readable medium. The computer-readable medium includes a computer storage medium. The storage medium may be any usable medium accessible to a computer. The following is used as an example but not a limitation: The computer-readable medium may be a random access memory (English full name: random access memory, RAM for short), a read-only memory (English full name: read-only memory, ROM for short), an electrically erasable programmable read-only memory (English full name: electrically erasable programmable read-only memory, EEPROM for short), a compact disc read-only memory (English full name: compact disk read-only memory, CD-ROM for short) or other optical disk storage, a magnetic disk storage medium or another magnetic storage device, or any other medium that can be used to carry or store expected program code in a command or data structure form and that can be accessed by a computer. The computer-readable medium may be a compact disc (English full name: compact disk, CD for short), a laser disc, a digital video disc (English full name: digital video disk, DVD for short), a floppy disk, or a Blu-ray disc.

The embodiments in this specification are all described in a progressive manner. For same or similar parts in the embodiments, reference may be made to these embodiments, and each embodiment focuses on a difference from other embodiments. Especially, a system embodiment is basically similar to a method embodiment, and therefore is described briefly. For related parts, refer to partial descriptions in the method embodiment.

The embodiments disclosed above are described to enable a person skilled in the art to implement or use the present invention. Various modifications to the embodiments are obvious to the person skilled in the art, and general principles defined in this specification may be implemented in other embodiments without departing from the scope of the present invention. Therefore, the present invention is not limited to the embodiments described in this specification but extends to the widest scope that complies with the principles and novelty disclosed in this specification.

## Claims

1. A service flow configuration method, wherein the method comprises:
receiving, by a control device, a first dynamic host configuration protocol DHCP packet sent by a DHCP server, wherein the first DHCP packet comprises an internet protocol IP address of a server configured to provide a configuration file, an identifier of the configuration file, and an IP address of a user-side terminal;
obtaining, by the control device, a second DHCP packet based on the first DHCP packet, wherein the second DHCP packet comprises an IP address of the control device, the identifier of the configuration file, and the IP address of the terminal;
sending, by the control device, the second DHCP packet to the terminal;
receiving, by the control device, a first request packet sent by the terminal, wherein the first request packet comprises the identifier of the configuration file;
obtaining, by the control device based on the identifier of the configuration file from the server configured to provide the configuration file, a configuration file corresponding to the terminal; and
performing, by the control device, service configuration on the terminal and an access node based on the configuration file corresponding to the terminal.

2. The method according to claim 1, wherein the obtaining, by the control device based on the identifier of the configuration file from the server configured to provide the configuration file, a configuration file corresponding to the terminal comprises:
generating, by the control device, a second request packet based on the first request packet, wherein the second request packet comprises the identifier of the configuration file, and a destination address of the second request packet is the IP address of the server configured to provide the configuration file;
sending, by the control device, the second request packet to the server configured to provide the configuration file; and
receiving, by the control device, the configuration file corresponding to the terminal that is sent by the server configured to provide the configuration file.

3. The method according to claim 1 or 2, wherein the configuration file corresponding to the terminal comprises configuration data of the access node and a configuration file of the terminal, the configuration data of the access node is used to perform service configuration on the access node, and the configuration file of the terminal is used to perform service configuration on the terminal.

4. The method according to claim 3, wherein the access node comprises a cable media converter CMC and an optical line terminal OLT, and the performing, by the control device, service configuration on the terminal and an access node based on the configuration file corresponding to the terminal comprises:
obtaining, by the control device, the configuration data of the access node from the configuration file corresponding to the terminal;
generating, by the control device, a first parameter set and a second parameter set based on the configuration data of the access node, wherein the first parameter set is used to perform service configuration on the CMC, and the second parameter set is used to perform service configuration on the OLT;
obtaining, by the control device, the configuration file of the terminal from the configuration file corresponding to the terminal; and
sending, by the control device, the first parameter set to the CMC, sending the second parameter set to the OLT, and sending the configuration file of the terminal to the terminal.

5. The method according to claim 3, wherein the access node is a cable modem termination system CMTS or a converged cable access platform CCAP, and the performing, by the control device, service configuration on the terminal and an access node based on the configuration file corresponding to the terminal comprises:
obtaining, by the control device, the configuration data of the access node from the configuration file corresponding to the terminal;
generating, by the control device, a parameter set based on the configuration data of the access node, wherein the parameter set is used to perform service configuration on the CMTS or the CCAP;
obtaining, by the control device, the configuration file of the terminal from the configuration file corresponding to the terminal; and
sending, by the control device, the parameter set to the access node, and sending the configuration file of the terminal to the terminal.

6. A service flow configuration method, wherein the method comprises:
sending, by a user-side terminal, a dynamic host configuration protocol DHCP request packet to an access node, wherein the DHCP request packet comprises a first internet protocol IP address of the terminal;
receiving, by the terminal, a DHCP response packet sent by the access node, wherein the DHCP response packet comprises an IP address of a control device, an identifier of a configuration file, and a second IP address of the terminal;
sending, by the terminal, a first request packet to the control device, wherein the first request packet comprises the identifier of the configuration file, and a destination address of the first request packet is the IP address of the control device;
receiving, by the terminal, a configuration file sent by the control device; and
performing, by the terminal, service configuration based on the configuration file.

7. A service flow configuration method, wherein the method comprises:
obtaining, by an access node, a parameter set of the access node from a control device, wherein the parameter set of the access node is a parameter set that is used to perform service configuration and that is obtained in a process in which a user-side terminal obtains a configuration file; and
performing, by the access node, service configuration based on the parameter set.

8. The method according to claim 7, wherein before the obtaining, by an access node, a parameter set of the access node from a control device, the method further comprises:
receiving, by the access node, a dynamic host configuration protocol DHCP request packet sent by the terminal, wherein the DHCP request packet comprises a first internet protocol IP address of the terminal;
forwarding, by the access node, the DHCP request packet to the control device;
receiving, by the access node, a DHCP response packet sent by the control device, wherein the DHCP response packet comprises an IP address of the control device, an identifier of a configuration file, and a second IP address of the terminal; and
forwarding, by the access node, the DHCP response packet to the terminal.

9. A control device, wherein the control device comprises:
a first receiving unit, configured to receive a first dynamic host configuration protocol DHCP packet sent by a DHCP server, wherein the first DHCP packet comprises an internet protocol IP address of a server configured to provide a configuration file, an identifier of the configuration file, and an IP address of a user-side terminal;
a first obtaining unit, configured to obtain a second DHCP packet based on the first DHCP packet, wherein the second DHCP packet comprises an IP address of the control device, the identifier of the configuration file, and the IP address of the terminal;
a first sending unit, configured to send the second DHCP packet to the terminal;
a second receiving unit, configured to receive a first request packet sent by the terminal, wherein the first request packet comprises the identifier of the configuration file;
a second obtaining unit, configured to obtain, based on the identifier of the configuration file from the server configured to provide the configuration file, a configuration file corresponding to the terminal; and
a configuration unit, configured to perform service configuration on the terminal and an access node based on the configuration file corresponding to the terminal.

10. The control device according to claim 9, wherein the second obtaining unit is specifically configured to:
generate a second request packet based on the first request packet, wherein the second request packet comprises the identifier of the configuration file, and a destination address of the second request packet is the IP address of the server configured to provide the configuration file;
send the second request packet to the server configured to provide the configuration file; and
receive the configuration file corresponding to the terminal that is sent by the server configured to provide the configuration file.

11. The control device according to claim 9 or 10, wherein the configuration file corresponding to the terminal comprises configuration data of the access node and a configuration file of the terminal, the configuration data of the access node is used to perform service configuration on the access node, and the configuration file of the terminal is used to perform service configuration on the terminal.

12. The control device according to claim 11, wherein the access node comprises a cable media converter CMC and an optical line terminal OLT, and the configuration unit is specifically configured to:
obtain the configuration data of the access node from the configuration file corresponding to the terminal;
generate a first parameter set and a second parameter set based on the configuration data of the access node, wherein the first parameter set is used to perform service configuration on the CMC, and the second parameter set is used to perform service configuration on the OLT;
obtain the configuration file of the terminal from the configuration file corresponding to the terminal; and
send the first parameter set to the CMC, send the second parameter set to the OLT, and send the configuration file of the terminal to the terminal.

13. The control device according to claim 11, wherein the access node is a cable modem termination system CMTS or a converged cable access platform CCAP, and the configuration unit is specifically configured to:
obtain the configuration data of the access node from the configuration file corresponding to the terminal;
generate a parameter set based on the configuration data of the access node, wherein the parameter set is used to perform service configuration on the CMTS or the CCAP;
obtain the configuration file of the terminal from the configuration file corresponding to the terminal; and
send the parameter set to the access node, and send the configuration file of the terminal to the terminal.

14. A user-side terminal, wherein the terminal comprises:
a first sending unit, configured to send a dynamic host configuration protocol DHCP request packet to an access node, wherein the DHCP request packet comprises a first internet protocol IP address of the terminal;
a first receiving unit, configured to receive a DHCP response packet sent by the access node, wherein the DHCP response packet comprises an IP address of a control device, an identifier of a configuration file, and a second IP address of the terminal;
a second sending unit, configured to send a first request packet to the control device, wherein the first request packet comprises the identifier of the configuration file, and a destination address of the first request packet is the IP address of the control device;
a second receiving unit, configured to receive a configuration file sent by the control device; and
a configuration unit, configured to perform service configuration based on the configuration file.

15. An access node, wherein the access node comprises:
an obtaining unit, configured to obtain a parameter set of the access node from a control device, wherein the parameter set of the access node is a parameter set that is used to perform service configuration and that is obtained in a process in which a user-side terminal obtains a configuration file; and
a configuration unit, configured to perform service configuration based on the parameter set.

16. The access node according to claim 15, wherein the access node further comprises:
a first receiving unit, configured to receive a dynamic host configuration protocol DHCP request packet sent by the terminal, wherein the DHCP request packet comprises a first internet protocol IP address of the terminal;
a first sending unit, configured to forward the DHCP request packet to the control device;
a second receiving unit, configured to receive a DHCP response packet sent by the control device, wherein the DHCP response packet comprises an IP address of the control device, an identifier of a configuration file, and a second IP address of the terminal; and
a second sending unit, configured to forward the DHCP response packet to the terminal.

17. The access node according to claim 15 or 16, wherein the access node further comprises the control device.
